# EUROPÄISCHE PATENTSCHRIFT

(11) **EP 1 931 939 B1**
(45) Veröffentlichungstag und Bekanntmachung des Hinweises auf die Patenterteilung: **29.04.2009**
(21) Anmeldenummer: 06793549.4
(22) Anmeldetag: 15.09.2006
(51) Int. Cl.: G01B 9/02

(54) **INTERFEROMETRISCHE MESSEINRICHTUNG**
INTERFEROMETRIC MEASURING DEVICE
SYSTEME DE MESURE INTERFEROMETRIQUE

(30) Priorität: 29.09.2005 DE 102005046605
(43) Veröffentlichungstag der Anmeldung: 18.06.2008
(73) Patentinhaber: ROBERT BOSCH GMBH, 70442 Stuttgart (DE)
(72) Erfinder: FRANZ, Stefan, 07747 Jena (DE); FLEISCHER, Matthias, 73760 Ostfildern (DE)
(86) Internationale Anmeldenummer: PCT/EP2006/066398
(87) Internationale Veröffentlichungsnummer: WO 2007/036442

(56) Entgegenhaltungen:
- DE-A1- 4 404 663
- DE-A1- 19 808 273
- DE-B3- 10 244 553
- MEGGITT B T ET AL: "An all fibre white light interferometric strain measurement system" SENSORS AND ACTUATORS A, ELSEVIER SEQUOIA S.A., LAUSANNE, CH, Bd. 79, Nr. 1, Januar 2000 (2000-01), Seiten 1-7, XP004185118 ISSN: 0924-4247

## Beschreibung

Die Erfindung betrifft eine Vorrichtung für eine interferometrische Messeinrichtung mit einem ersten Interferometer, und einem zweiten Interferometer, einen Strahlunsquelle und einem ersten Strahlteiler wobei dem ersten Interferometer über die Strahlungsquelle kurzkohärente Strahlung zugeführt wird, die über den ersten Strahlteiler in zwei Teilstrahlen aufgeteilt wird und wobei die optische Weglänge in einem Teilstrahl dahingehend länger ist als in dem anderen Teilstrahl, dass der optische Gangunterschied größer als die Kohärenzlänge der Strahlung ist, wobei die beiden Teilstrahlen vor einem Austritt des ersten Interferometers wieder vereinigt und dem zweiten Interferometer zugeführt werden, welches die Strahlung in zwei weitere Teilstrahlen aufteilt, wobei die optischen Weglängen der beiden Teilstrahlen dahingehend unterschiedliche sind, dass der in dem ersten Interferometer eingeschriebene optische Gangunterschied wieder ausgeglichen wird.

Die Erfindung betrifft weiterhin ein Verfahren zum Ausgleich der optischen Wegdifferenz in einer interferometrischen Messeinrichtung mit zwei aufeinander folgenden Interferometern, wobei dem ersten Interferometer über eine Strahlungsquelle kurzkohärente Strahlung zugeführt wird, die über einen ersten Strahlteiler in zwei Teilstrahle aufgeteilt wird, von denen ein Teilstrahl eine größere optische Weglänge als der andere Teilstrahl dahingehend durchläuft, dass der optische Gangunterschied zwischen den Teilstrahlen größer als die Kohärenzlänge der Strahlung ist, wobei die beiden Teilstrahlen vor einem Austritt des ersten Interferometers wieder vereinigt und dem zweiten Interferometer zugeführt werden, welches die Strahlung in zwei weitere Teilstrahle aufteilt, wobei die optischen Weglängen der beiden Teilstrahlen dahingehend unterschiedlich sind, dass der in dem ersten Interferometer eingeschriebene optische Gangunterschied wieder ausgeglichen wird.

Die Erfindung wird durch die unabhängigen Ansprüche 1 und 12 definiert.

### Stand der Technik

Eine solche interferometische Messeinrichtung ist in der Schrift DE 102 44 553 dargestellt. Die Schrift offenbart eine interferometrische Messvorrichtung zum Erfassen der Form, der Rauheit oder des Abstandes der Oberfläche eines Messobjektes mit einem Modulationsinterferometer, dem von einer Strahlungsquelle kurzkohärente Strahlung zugeführt wird und das einen ersten Strahlteiler zum Aufteilen der zugeführten Strahlung in einen über einen ersten Arm geführten ersten Teilstrahl und einen über einen zweiten Arm geführten zweiten Teilstrahl aufweist, von denen der eine gegenüber dem anderen mittels einer Modulationseinrichtung in seiner Licht-Phase oder Lichtfrequenz verschoben wird und eine Verzögerungsstrecke durchläuft, und die anschließend an einem weiteren Strahlteiler des Modulationsinterferometers vereinigt werden, mit einer von dem Modulationsinterferometer räumlich getrennten und mit dieser über eine Lichtleitfaseranordnung gekoppelten oder koppelbaren Messsonde, in der die vereinigten Teilstrahlen in einen durch eine Sonden-Lichtleitfasereinheit mit einer schrägen objektseitigen Austrittsfläche zu der Oberfläche geführten Messstrahl und einen Referenzstrahl aufgeteilt und in der der and der Oberfläche reflektierte Messstrahl (r₁(t)) und der an einer Referenzebene reflektierte Referenzstrahl (r₂(t)) überlagert werden, und mit einer Empfängervorrichtung und einer Auswerteeinheit zum Umwandeln der ihr zugeleiteten Strahlung in elektrische Signale und zum Auswerten der Signale auf der Grundlage einer Phasendifferenz. Dabei beträgt der Neigungswinkel (y) der Austrittsfläche gegenüber der Normalen der optischen Sondenachse mindestens 46°.

Auch die DE 198 08 273 beschreibt eine solche interferometrische Messeinrichtung zum Erfassen der Form oder des Abstandes insbesondere rauer Oberflächen mit mindestens einer räumlich kohärenten Strahlerzeugungseinheit, deren Strahlung in einer Messsonde in einen durch einen Messreferenzzweig geführten und darin reflektierten Referenzmessstrahl und in einen durch einen Messzweig geführten und an der rauen Oberfläche reflektierten Messstrahl aufgeteilt wird, mit einer Einrichtung zur Modulation der Licht-Phase oder zum Verschieben der Licht-Frequenz (Heterodynfrequenz) eines ersten Teitstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauen Oberfläche auf der Grundlage einer Phasendifferenz der elektrischen Signale bestimmbar ist. Dabei ist die von der Strahlerzeugungseinheit abgegebene Strahlung zeitlich kurzkohärent und breitbandig.

Solche zunächst aus zwei Interferometern bestehenden interferometrischen Messeinrichtungen können mit unterschiedlichen Interferometertypen aufgebaut sein. So kann das Modulationsinterferometer als Mach-Zehnder Interferometer aufgebaut sein, während das Messinterferometer beziehungsweise die Messsonde kompakt beispielsweise als Mirau-Interferometer aufgebaut ist. Gemeinsam ist den interferometrischen Messeinrichtungen, dass ein im ersten Interferometer eingeschriebener Gangunterschied zwischen zwei Teilstrahlen von einer kurzkohärenten Strahlungsquelle in dem zweiten Messinterferometer bzw. Messsonde wieder ausgeglichen wird und so die Teilstrahlen zur Interferenzbildung gebracht werden. Der in der DE 198 08 273 durch ein Verzögerungselement eingeschriebene Gangunterschied kann dabei auch durch unterschiedlich lange Teilarme, welche von den Teilstrahlen durchlaufen werden, erzeugt werden, wie es in der DE 198 08 273 in einem mit Lichtleitern aufgebauten Modulationsinterferometer dargestellt ist.

Um die Messgenauigkeit der interferometrischen Messeinrichtung zu verbessern ist es bekannt, an einen zweiten Ausgang des Modulationsinterferometers ein Referenzinterferometer anzuschließen. Es ist optisch ebenso aufgebaut wie das Messinterferometer, d.h., es gleicht den im Modulationsinterferometer eingeschriebenen Gangunterschied zwischen den zwei Teilstrahlen wieder aus. Der konstruktive Aufbau des Referenzinterferometers unterscheidet sich jedoch von dem des Messinterferometers. Die Messgenauigkeit der interferometrischen. Messeinrichtung lässt sich durch Vergleich der Signale des Referenzinterferometers mit denen des Messinterferometers verbessern.

Der in dem Modulationsinterferometer einzuschreibende Gangunterschied richtet sich nach der konstruktiven Ausführung des Messinterferometers beziehungsweise der Messsonde. Nach einem Wechsel des Messinterferometers / der Messsonde muss demnach entsprechend der Gangunterschied in dem Modulationsinterferometer angepasst werden. Dies geschieht im Allgemeinen motorisch durch Verschieben optischer Bauteile.

Auch in dem Referenzinterferometer muss der Gangunterschied entsprechend angepasst werden. Hier ist es üblich, den Gangunterschied durch Austausch einer vorjustierten Einheit einzustellen. Nachteilig hierbei ist, dass entsprechend der eingesetzten Messinterferometer angepasste Einheiten bereitstehen müssen. Dabei ist der Austausch der Einheiten aufwändig.

Das Dokument B.T. Meggitt, C.J. Hall, K. Weir: "An all fibre white light interferometric strain measurement system", Sensors and Actuators 79 (2000) S. 1-7, offenbart eine interferometrische Messeinrichtung mit einer kurzkohärenten Strahlungsquelle und zwei Interferometern, wobei der optische Gangunterschied zwischen den Armen des ersten Interferometers grösser ist als die Kohärenzlänge der Strahlung und wobei dieser Gangunterschied im zweiten Interferometer wieder ausgeglichen wird.

Es ist Aufgabe der Erfindung, eine Vorrichtung für eine interferometrische Messeinrichtung bereitzustellen, welche eine einfache Anpassung der eingeschriebenen Gangunterschiede zwischen Teilstrahlen optisch gekoppelter Interferometer ermöglicht.

Es ist weiterhin Aufgabe der Erfindung, hierzu ein Verfahren bereitzustellen.

### Vorteile der Erfindung

Die die Vorrichtung betreffende Aufgabe der Erfindung wird mit den Merkmalen des Anspruchs 1 gelöst. Hiernach ist vorgesehen, dass die optische Weglänge für jeweils einen Teilstrahl in dem ersten und in dem zweiten Interferometer durch zumindest ein bewegliches optisches Bauelement einstellbar ist und dass die beweglichen optischen Bauelemente mechanisch miteinander gekoppelt sind. Durch die mechanische Kopplung wird eine Änderung der optischen Weglänge in einem Interferometer gleichzeitig auch in dem anderen Interferometer durchgeführt. Es ist somit keine separate Anpassung der Gangunterschied in den Interferometern oder ein Austausch einer optischen Einheit notwendig, die Anpassung erfolgt in einem Arbeitsschritt.

Eine geeignete Anpassung der Gangunterschiede in den beiden Interferometern wird dadurch erreicht, dass das Vorzeichen der Änderung der optischen Weglängen in den beiden Teilstrahlen des ersten und des zweiten Interferometers gleich oder gegensinnig ist und/oder dass der Betrag der Änderung der optischen Weglängen in den beiden Teilstrahlen gleich ist. Da die beiden Teilstrahlen am Ausgang des ersten Interferometers vereinigt und zu Beginn des zweiten Interferometers erneut in zwei Teilstrahle aufgeteilt werden, liegt in beiden Teilstrahlen des zweiten Interferometers ein Strahlungsanteil sowohl des nicht verzögerten als auch des verzögerten Teilstrahls aus dem ersten Interferometer vor. Eine Verkürzung der optischen Weglänge eines der Teilstrahlen in dem zweiten Interferometer hat somit die gleiche Auswirkung auf die zeitliche Abfolge der Strahlungsanteile wie eine Verlängerung der optischen Weglänge in dem anderen Teilstrahl. Somit kann sowohl mit einer gleichsinnigen wie auch mit einer gegensinnigen Änderung der optischen Weglängen in den jeweiligen Teilstrahlen des ersten und des zweiten Interferometers eine Überlagerung der jeweiligen Strahlungsanteile herbeigeführt werden und die Teilstrahlen zur Interferenz gebracht werden.

Die mechanische Kopplung der beweglichen optischen Bauelemente der beiden Interferometer kann dadurch erreicht werden, dass die beweglichen optischen Bauelemente auf einem gemeinsamen beweglichen Träger montiert sind.

In bevorzugten Ausführungsformen der Erfindung sind die beweglichen optischen Bauelemente als Planspiegel, als Tripelspiegel oder als Koppelelemente für Lichtleitelemente ausgeführt. Diese Bauelemente werden auch in heute üblichen interferometrischen Messeinrichtungen der beschriebenen Art ohne die erfindungsgemäße mechanische Kopplung eingesetzt und haben sich entsprechend bewährt.

Die mechanische Kopplung der beweglichen optischen Bauelemente kann auch dadurch erreicht werden, dass die beweglichen optischen Bauelemente der beiden Interferometer in einem beweglichen optischen Bauelement integriert sind. Dies ermöglicht einen sehr kompakten und kostengünstigen Aufbau der Interferometer, wobei eine fehlerarme Antastung der beweglichen optischen Bauelemente in den Teilstrahlen der beiden Interferometer gewährleistet ist.

Die Zusammenfassung der beiden beweglichen optischen Bauelemente in ein integriertes optisches Bauelement lässt sich dadurch erreichen, dass das integrierte optische Bauelement als Tripelprisma mit einem Strahleintritt für das erste Interferometer und einem Strahleintritt für das zweite Interferometer sowie einem Strahlaustritt für das erste Interferometer und einem Strahlaustritt für das zweite Interferometer ausgelegt ist. Diese Anordnung eignet sich bei zwei Interferometern, bei denen die in das integrierte optische Bauelement einfallenden Strahlen und die austretenden Strahlen getrennt verlaufen, wie dies beispielsweise von Mach-Zehnder-Interferometern bekannt ist. Vorteilhaft bei dieser Ausführung auf Basis eines Tripelprismas ist die einfache Ausrichtung des Bauelementes in den Strahlengängen der beiden Interferometer aufgrund der Fehlertoleranz in der Strahlführung bei einem Tripelprisma. Weiterhin können die optischen Weglängen in den beiden Strahlengängen beim Durchgang durch das Tripelprisma gleich gehalten werden.

Eine weitere Möglichkeit, die beiden beweglichen optischen Bauelemente in ein optisches Bauelement zu integrieren besteht darin, das integrierte optische Bauelement als Tripelprisma mit eingangsseitig bereichsweise verspiegelter Oberfläche auszufahren, wobei ein Teilstrahl eines Interferometers mit getrennten Strahlwegen über einen Strahleintritt und einen Strahlaustritt durch das Tripelprisma umgelenkt ist und ein Teilstrahl des anderen Interferometers mit übereinander liegenden Strahlwegen an der verspiegelten Oberfläche umgelenkt ist. Diese Ausführung eignet sich demnach für interferometrischen Messeinrichtungen, bei denen bei einem Interferometer der in das beweglichen optische Bauelement einfallende Strahl und der austretende Strahl getrennt verlaufen, während bei dem anderen Interferometer der in das optischen Bauelement einfallende Strahl und der austretende Strahl übereinander liegen, wie dies beispielsweise bei einem Michelson-Interferometer üblich ist.

Ein einfacher und genauer Abgleich der Gangunterschiede lässt sich dadurch erreichen, dass zur Verschiebung der beweglichen optischen Bauelemente ein manuell oder ein motorisch angetriebener Linearantrieb vorgesehen ist. Dabei kann insbesondere der motorische Antrieb Teil einer automatisierten Messeinrichtung sein, bei der der Ausgleich der Gangunterschiede durch eine elektronische Steuereinheit vorgenommen wird.

Ein sehr breit gefächertes Einsatzgebiet der Erfindung für unterschiedlichste optisch gekoppelte Interferometer lässt sich dadurch erreichen, dass die Strahleinkopplung in die interferometrische Messeinrichtung, die optische Verbindung zwischen den beiden Interferometern und/oder die Fortleitung der Austrittsstrahlen mittels Lichtleitern oder als Freistrahl erfolgt.

Können die beweglichen optischen Bauelemente der beiden Interferometer aufgrund von baulichen Gegebenheiten nicht mechanisch, beispielsweise durch einen gemeinsamen beweglichen Träger, miteinander gekoppelt werden, so kann eine gleichzeitig und gleichartige Veränderung der optischen Weglängen in den jeweiligen Teilarmen der Interferometer dadurch erreicht werden, dass in beiden Interferometern separat bewegliche optische Bauelemente zum Einstellen der optischen Gangunterschiede zwischen den Teilstrahlen vorgesehen sind und die Kopplung der Bewegung der optischen Bauelemente elektronisch über die gleichartige Ansteuerung von elektrischen Antriebselementen ausgeführt ist.

In einer bevorzugten Ausführungsform der Erfindung stellt das erste Interferometer ein Modulationsinterferometer dar, während das zweite Interferometer ein Referenzinterferometer oder eine Referenzsonde oder eine Referenzmessstelle bildet. Dabei ist das Referenzinterferometer, die Referenzsonde oder die Referenzmessstelle an einem Ausgang des Modulationsinterferometers angeschlossen, während an dem anderen Ausgang des Modulationsinterferometers üblicherweise eine Messsonde oder ein Messinterferometer angeschlossen ist. Die Messsonde oder das Messinterferometer können in bekannter Art als kompakte Baueinheit, beispielsweise flexibel über Lichtleiter, mit dem Modulationsinterferometer verbunden sein und der Bestimmung von Oberflächenrauhigkeiten dienen. Macht ein Wechsel der Messsonde oder des Messinterferometers eine Anpassung der Gangunterschiede in dem Modulationsinterferometer und der Referenzsonde beziehungsweise dem Referenzinterferometer oder der Referenzsonde erforderlich, so kann dies ohne großen Aufwand in einem Schritt durch Verschieben der mechanisch gekoppelten optischen Bauelemente erfolgen.

Die das Verfahren betreffende Aufgabe der Erfindung wird dadurch gelöst, dass die optischen Gangunterschiede zwischen den Teilstrahlen in den beiden Interferometern durch mechanisch gekoppelte bewegliche optische Bauelemente gleichzeitig und um den gleichen Betrag verändert werden. Die Anpassung der eingeschriebenen Gangunterschiede zwischen den Teilstrahlen erfolgt somit synchron durch Veränderung der optischen Weglängen in den beiden variablen Teilstrahlen der beiden Interferometer. Macht beispielsweise der Wechsel eines dritten optisch an das erste Interferometer gekoppelten Interferometers eine Anpassung der Gangunterschiede in dem ersten und dem zweiten Interferometer notwendig, so erfolgt dies in einem Arbeitsschritt, ohne dass ein Austausch optischer Komponenten notwendig ist.

Dabei kann die Anpassung der optischen Gangunterschiede dadurch erreicht werden, dass die Änderung der optischen Weglänge in beiden Teilstrahlen gleich- oder gegensinnig erfolgt

### Zeichnung

Die Erfindung wird im Folgenden anhand der in den Figuren dargestellten Ausführungsbeispiele näher erläutert. Es zeigen:
- Figur 1: in schematischer Darstellung eine interferometrische Messeinrichtung mit mechanisch gekoppelten beweglichen optischen Bauelementen zweier Interferometer,
- Figur 2: eine interferometrische Messeinrichtung mit mechanisch gekoppelten beweglichen optischen Bauelementen bei einem Mach-Zehnder-Interferometer und einem Michelson-Interferometer,
- Figur 3: eine Varianten einer interferometrischen Messeinrichtung mit mechanisch gekoppelten beweglichen optischen Bauelementen bei zwei Interferometern,
- Figur 4: ein integriertes optisches Bauelement für mechanisch gekoppelte Interferometer mit getrennten Strahlwegen,
- Figur 5: ein integriertes optisches Bauelement für mechanisch gekoppelte Interferometer mit getrennten und übereinander liegenden Strahlwegen,
- Figur 6: eine interferometrische Messeinrichtung mit direkter Kopplung der Strahlumlenkung von zwei Interferometern.

### Beschreibung der Ausführungsbeispiele

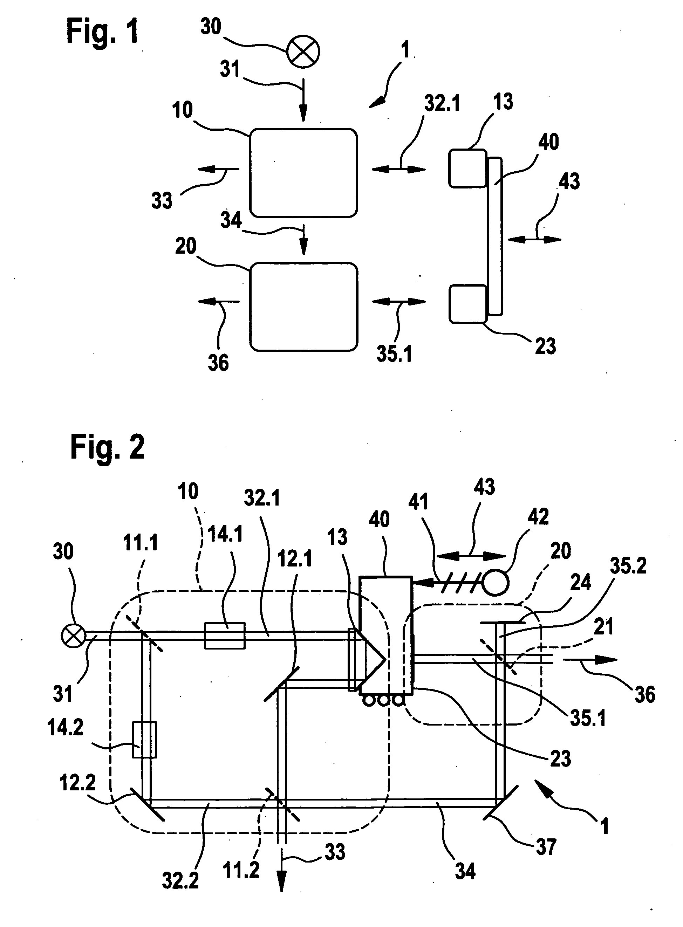

Figur 1 zeigt eine interferometrische Messeinrichtung 1 in schematischer Darstellung mit einer kurzkohärenten Strahlungsquelle 30, einem ersten Interferometer 10 und einem zweiten Interferometer 20 sowie zwei beweglichen optischen Bauelementen 13, 23 und einem entsprechend der dargestellten Bewegungsrichtung 43 beweglichen Träger 40. Kurzkohärente Strahlung 31 der Strahlungsquelle 30 wird dem ersten Interferometer 10 zugeführt. In dem ersten Interferometer 10 wird die zugeführten kurzkohärente Strahlung 31 hier nicht dargestellt in zwei Teilstrahle 32.1, 32.2 aufgeteilt, wobei ein Teilstrahl 32.1 dem beweglichen optischen Bauelement 13 zugeführt wird. Das bewegliche optische Bauelement 13 ist als Strahlumlenker für den Teilstrahl 32.1 ausgeführt. Der von dem beweglichen optischen Bauelement 13 zurück geführte Teilstrahl 32.1 wird nicht dargestellt in dem ersten Interferometer 10 wieder mit dem nicht dargestellten Teilstrahl 32.2 überlagert und dem Strahlaustritt 33 und dem Stahlübergang 34 zu dem zweiten Interferometer 20 zugeführt. In dem zweiten Interferometer 20 wird die über den Strahlübergang 34 zugeführte Strahlung nicht dargestellt in zwei Teilstrahle 35.1, 35.2 aufgeteilt, wobei ein Teilstrahl 35.1 dem beweglichen optischen Bauelement 23, welches ebenfalls als Strahlumlenker ausgeführt ist, zugeführt wird. Die Teilstrahlen 35.1 und nicht dargestellt 35.2 werden im Anschluss an das bewegliche optische Bauelement 23 in dem zweiten Interferometer 20 wieder überlagert und einem Strahlaustritt 36 zugeführt.

Die beweglichen optischen Bauelemente 13, 23 sind auf dem gemeinsamen beweglichen Träger 40 gehalten und so mechanisch gekoppelt. Eine Bewegung des beweglichen Träges 40 entsprechend der Bewegungsrichtung 43 führt daher zu einer gleichartigen Bewegung der beweglichen optischen Bauelemente 13, 23. Somit wird die optische Weglänge für den ersten Teilstrahl 32.1 des ersten Interferometers 10 um den gleichen Betrag verändert wie die optische Weglänge des ersten Teilstrahls 35.1 des zweiten Interferometers 20. Dies führt zu einer gleichen Veränderung der optischen Gangunterschiede zwischen den nicht dargestellten, einen festen optischen Weg durchlaufenden Teilstrahlen 32.2, 35.2 und den in ihrer optischen Weglänge variabel einstellbaren Teilstrahlen 32.1, 35.1. Sind die eingeschriebenen Gangunterschiede in den beiden Interferometern 10, 20 zumindest ungefähr gleich, führt dies bei der verwendeten kurzkohärenten Strahlung 31 zur Interferenzbildung am Strahlaustritt 36 des zweiten Interferometers 20. Da die optischen Weglängen in den beiden Teilstrahlen 32.1, 35.1 durch den gemeinsamen beweglichen Träger 40 und die darüber mechanisch gekoppelten optischen Bauelemente 13, 23 gleichartig verstellt werden, entspricht der optische Gangunterschied in dem zweiten Interferometern 20 auch bei Verschiebung der beweglichen optischen Bauelemente 13, 23 weiterhin dem optischen Gangunterschied in dem ersten Interferometer 10, so dass die Bedingung für eine Interferenzbildung am Ausgang des zweiten Interferometers 20 erhalten bleibt.

Figur 2 zeigt eine interferometrische Messeinrichtung 1 mit mechanisch gekoppelten beweglichen optischen Bauelementen 13, 23 in einer Ausführungsform mit einem ersten Interferometer 10 als Modulationsinterferometer in Mach-Zehnder-Ausführung und einem zweiten Interferometer 20 als Referenzinterferometer in Michelson-Ausführung. Auch hier wird die kurzkohärente Strahlung 31 einer räumlich kohärenten, aber zeitlich kurzkohärenten Strahlungsquelle 30 dem ersten Interferometer 10 zugeführt. Das erste Interferometer 10 ist in Mach-Zehnder-Anordnung aus zwei Strahlteilern 11.1, 11.2 und zwei Umlenkspiegeln 12.1, 12.2 aufgebaut. Die eintreffende kurzkohärente Strahlung 31 wird von dem ersten Strahlteiler 11.1 in zwei Teilstrahle 32.1, 32.2 aufgeteilt. In die Strahlengänge der beiden Teilstrahlen 32.1, 32.2 sind zwei akustooptische Modulatoren 14.1, 14.2 eingebracht zur Realisierung eines Modulationsinterferometers nach bekannter Art. In den Strahlengang des ersten Teilstrahls 32.1 ist ein bewegliches optisches Bauelement 13 in Form eines Tripelprismas eingebracht, welches den von dem akustooptischen Modulator 14.1 kommenden ersten Teilstrahl 32.1 auf den Umlenkspiegel 12.1 und von dort auf den zweiten Strahlteiler 11.2 zurückwirft. Der zweite Teilstrahl 32.2 wird nach dem akustooptischen Modulator 14.2 von dem Umlenkspiegel 12.2 zu dem zweiten Strahlteiler 11.2 reflektiert, in welchem die beiden Teilstrahlen 32.1 und 32.2 überlagert und dem Strahlaustritt 33 und dem Strahlübergang 34 zugeführt werden.

Über einen Umlenkspiegel 37 wird die Strahlung vom Strahlübergang 34 dem zweiten Interferometer 20 zugeführt. Das zweite Interferometer 20 besteht als Michelson-Interferometer aus einem Strahlteiler 21, einem festen Spiegel 24 und einem beweglichen optischen Bauelement 23 in Form eines Spiegels. Die von dem Strahlübergang 34 und dem Spiegel 37 eintreffende Strahlung wird in dem Strahlteiler 21 in zwei Teilstrahle 35.1, 35.2 aufgeteilt. Teilstrahl 35.2 wird von dem festen Spiegel 24, Teilstrahl 35.1 von dem beweglichen optischen Bauelement 23 zurück zu dem Strahlteiler 21 reflektiert und von dort überlagert dem Strahlaustritt 36 zugeleitet.

Die beweglichen optischen Bauelemente 13, 23 sind auf einem gemeinsamen Träger 40 montiert, welcher mit einem Linearantrieb 41 mit Motor 42 verbunden ist. Der Motor 42 und der Linearantrieb 41 ermöglichen eine Bewegung des Trägers 40 und damit auch der beweglichen optischen Bauelemente 13, 23 entsprechend der dargestellten Bewegungsrichtung 43.

Aufgrund einer unterschiedlichen optischen Weglänge in den Strahlengängen der Teilstrahlen 32.1, 32.2 des ersten Interferometers 10 und des dadurch bedingten Gangunterschiedes zwischen den Teilstrahlen 32.1, 32.2 kommt es nach der Zusammenführung der Teilstrahlen 32.1, 32.2 in dem zweiten Strahlteiler 11.2 bei der verwendeten kurzkohärenten Strahlung 31 nicht zur Interferenzbildung. Der Gangunterschied kann durch Verschieben des Trägers 40 und des damit verbundenen optischen Bauelementes 13 variiert werden.

In dem zweiten Interferometer 20 wird zwischen den Teilstrahlen 35.1 und 35.2 ein ungefähr gleich großer Gangunterschied wie in dem ersten Interferometer 10 durch entsprechend unterschiedliche optische Weglängen in den Strahlengängen der beiden Teilstrahlen 35.1 und 35.2 eingeschrieben. Der Gangunterschied des ersten Interferometers 10 wird dadurch ausgeglichen und die beiden Teilstrahlen 35.1 und 35.2 können nach der Zusammenführung in dem Strahlteiler 21 interferieren.

Eine solche interferometrische Messeinrichtung 1 wird üblicherweise in Zusammenhang mit einem hier nicht dargestellten Messinterferometer, welches an den Strahlaustritt 33 des ersten Interferometers 10 optisch angekoppelt ist, ausgeführt. Dieses Messinterferometer kann kompakt ausgeführt und beispielsweise über Lichtwellenleiter flexibel an das Interferometer 10 angebunden sein und so beispielsweise Messaufgaben an unzugänglichen Messobjekten wahrnehmen. Auch in diesem Messinterferometer wird ein optischer Gangunterschied zwischen dessen Teilstrahlen eingeführt, welcher den in dem ersten Interferometer 10 eingeschriebenen Gangunterschied ausgleicht und so zur Interferenz führt. Der Gangunterschied in solchen Messinterferometern ist zumeist fest vorgegeben und variiert von Messinterferometer zu Messinterferometer. Ein Wechsel des Messinterferometers, wie er für unterschiedliche Messaufgaben notwendig sein kann, bedarf daher einer Anpassung des Gangunterschiedes in dem Modulationsinterferometer Interferometer 10 und somit auch in dem Referenzinterferometer Interferometer 20. Durch Verschieben des gemeinsamen Trägers 40 und der darüber mechanisch gekoppelten beweglichen optischen Bauelemente 13, 23 kann der Gangunterschied zwischen den Teilstrahlen 32.1, 32.2 des ersten Interferometers 10 und der Gangunterschied zwischen den Teilstrahlen 35.1, 35.2 des zweiten Interferometers 20 in einem Arbeitsschritt entsprechend an ein geändertes Messinterferometer angepasst werden. Eine gesonderte Anpassung des Gangunterschiedes in dem zweiten als Referenzinterferometer ausgeführten Interferometers 20, wie es heute durch Austausch von optischen Komponenten oder durch Einstellen mit einer Mikrometerschraube notwendig ist, kann somit entfallen.

Dabei werden die optischen Weglängen der Teilstrahlen 32.1, 35.1 in der dargestellten Ausführungsform um den gleichen Betrag, aber gegensinnig verändert. Die gegensinnige Verschiebung der optischen Weglängen in den Teilstrahlen 32.1, 35.1 der beiden Interferometer 10, 20 entspricht optisch gesehen einer gleichsinnigen Veränderung der optischen Weglängen. Da die beiden Teilstrahlen 32.1, 32.2 am zweiten Strahlteiler 11.2 des ersten Interferometers 10 vereinigt und am Strahlteiler 21 des zweiten Interferometers 20 erneut in zwei Teilstrahle 35.1, 35.2 aufgeteilt werden, liegt in beiden Teilstrahlen 35.1, 35.2 des zweiten Interferometers 20 ein Strahlungsanteil sowohl des nicht verzögerten als auch des verzögerten Teilstrahls 32.1, 32.2 aus dem ersten Interferometer 10 vor. Eine Verkürzung der optischen Weglänge eines der beiden Teilstrahlen 35.1, 35.2 in dem zweiten Interferometer 20 hat somit die gleiche Auswirkung auf die zeitliche Abfolge der Strahlungsanteile wie eine Verlängerung der optischen Weglänge in dem jeweils anderen Teilstrahl 35.1, 35.2. Somit kann sowohl mit einer gleichsinnigen wie auch mit einer gegensinnigen Änderung der optischen Weglängen in den jeweiligen Teilstrahlen 32.1, 35.1 des ersten und des zweiten Interferometers 10, 20 eine Überlagerung der jeweiligen Strahlungsanteile herbeigeführt werden und die Teilstrahlen 35.1, 35.2 zur Interferenz gebracht werden.

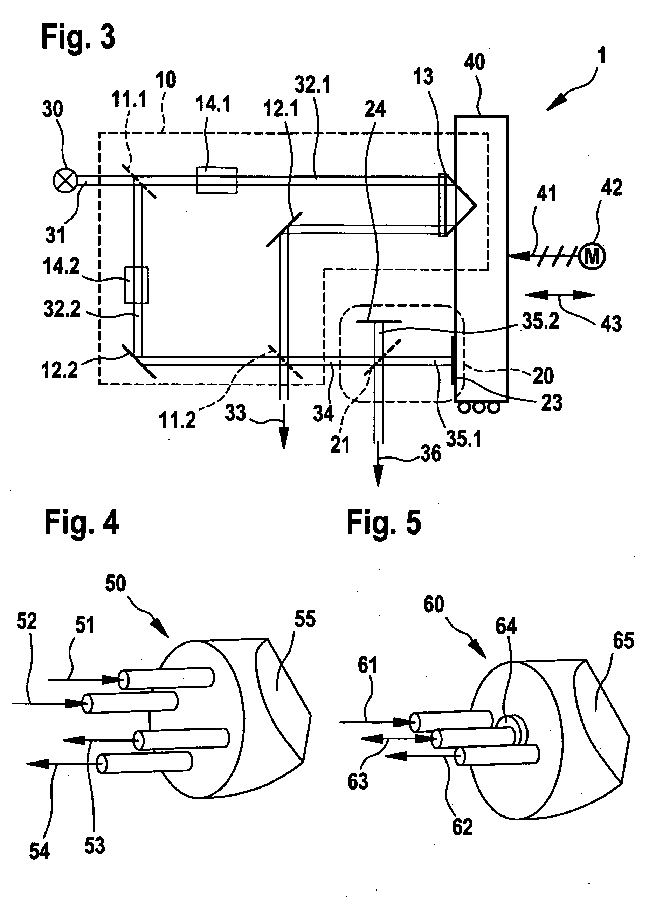

Figur 3 stellt eine weitere Variante einer interferometrischen Messeinrichtung 1 mit mechanisch gekoppelten beweglichen optischen Bauelementen 13, 23 bei zwei optisch gekoppelten Interferometern 10, 20 dar. Dabei ist das erste Interferometer 10 wieder als Mach-Zehnder-Interferometer als Modulationsinterferometer mit den bereits in Figur 2 beschriebenen Bauelementen ausgeführt. Das zweite Interferometer 20 ist ebenfalls wie in Figur 2 beschrieben als Michelson-Interferometer aufgebaut. Auch hier stellt eine Strahlungsquelle 30 kurzkohärente Strahlung 31 bereit. Im Gegensatz zu Figur 2 erfolgt der Strahlübergang 34 vom ersten Interferometer 10 zum zweiten Interferometer 20 direkt ohne Umlenkung durch einen weiteren Spiegel. Die beweglichen optischen Bauelemente 13, 23 sind derart auf einem gemeinsamen Träger 40 angeordnet, dass eine über einen Linearantrieb 41 und einen Motor 42 entsprechend einer Bewegungsrichtung 43 eingebrachte Verschiebung eine gleichsinnige Verschiebung der beiden beweglichen optischen Bauelemente 13, 23 um die gleiche Weglänge bewirkt. Ein in dem ersten Interferometer 10 zwischen den Teilstrahlen 32.1, 32.2 eingeschriebener Gangunterschied wird in dem zweiten Interferometer 20 durch einen entsprechenden Gangunterschied zwischen den Teilstrahlen 35.1, 35.2 wieder ausgeglichen und die beiden Teilstrahlen 35.1,35.2 so in dem Strahlteiler 21 zur Interferenz gebracht. Eine Änderung des Gangunterschiedes zwischen den Teilstrahlen 32.1 und 32.2 und zwischen den Teilstrahlen 35.1 und 35.2, wie sie beispielsweise der Wechsel eines nicht dargestellten, an den Strahlaustritt 36 des ersten Interferometers 10 optisch angekoppelten Messinterferometers notwendig macht, kann in einem Arbeitsgang durch Verschieben des gemeinsamen Trägers 40 und der darüber mechanisch gekoppelten beweglichen optischen Bauelemente 13, 23 erfolgen.

Durch die mechanische Kopplung der beweglichen optischen Bauelemente 13, 23 und damit der Weglängen der Teilstrahlen 32.1, 35.1 wird erreicht, dass die optischen Weglängenunterschiede in den beiden Interferometern 10, 20 gleich sind. Im Strahlaustritt 36 des zweiten Interferometers 20 werden deshalb stets auswertbare Inteiferenzerseheinungen auftreten.

In der Realisierung einer solchen interferometrischen Messeinrichtung 1 sind die beiden Interferometer 10, 20 räumlich so angeordnet, dass die beweglichen Strahlumlenkungen in Form der beweglichen optischen Bauelemente 13, 23 mechanisch über den gemeinsamen beweglichen Träger 40 miteinander verbunden werden können. Die Einkopplung der Strahlung 31, die optische Verbindung der Interferometer 10, 20 und die Fortleitung der Austrittsstrahlen aus den Strahlaustritten 33, 36 der Interferometern 10, 20 kann, wie dargestellt, als Freistrahl oder in Lichtleitern erfolgen. Für die Bewegung der beweglichen optischen Bauelemente 13, 23 beziehungsweise des gemeinsamen Trägers 40 kommen alle bekannten Verfahren in Betracht.

Der Vorteil der in Figur 3 dargestellten interferometrischen Messeinrichtung 1 gegenüber der in Figur 2 dargestellten interferometrischen Messeinrichtung 1 liegt in einer verbesserten Effizienz der Strahlausbeute.

Figur 4 stellt ein integriertes optisches Bauelement 50 für nicht dargestellte mechanisch gekoppelte Interferometer 10, 20 mit getrennten Strahlwegen dar. Das integrierte optische Bauelement 50 ist als Trippelprisma 55 mit jeweils einem Strahleintritt 51, 52 und jeweils einem Strahlaustritt 53, 54 für ein erstes und ein zweites Interferometer 10, 20 ausgelegt. Das integrierte optische Bauelement 50 ist dabei für Interferometer 10, 20 mit getrennten Strahlwegen ausgelegt, d.h., die einfallenden und reflektierten Anteile der Teilstrahlen 32.1, 35.1 verlaufen nicht auf einer Strahllinie.

Figur 5 stellt eine weiter Variante eines integrierten optischen Bauelementes 60 für nicht dargestellte mechanisch gekoppelte Interferometer 10, 20, hier jedoch mit getrennten und übereinander liegenden Strahlwegen, dar. Das integrierte optische Bauelement 60 ist als Tripelprisma mit bereichsweise verspiegelter Oberfläche 64 ausgeführt. Für das Interferometer 10, 20 mit dem getrennten Strahlwegen steht ein Strahleintritt 61 und ein Strahlaustritt 62 zur Verfügung, während für das Interferometer 10, 20 mit den übereinander liegenden Strahlwegen ein gemeinsamer Strahlein-/austritt 63 vorgesehen ist. Ein in den Strahleintritt 61 eingekoppelter, nicht dargestellter Teilstrahle 32.1, 32.2 eines Interferometers 10, 20 wird über das Tripelprisma 65 zu dem Strahlaustritt 62 reflektiert, während ein in den gemeinsamen Strahlein-/austritt 63 auftreffender Teilstrahl 32.1, 32.2 von der verspiegelten Oberfläche 64 in den gemeinsamen Strahlein-/austritt 63 zurück reflektiert wird.

Die in Figur 4 und Figur 5 dargestellten integrierten optischen Bauelemente 50, 60 vereinen die in den Figuren 1 bis 3 dargestellten beweglichen optischen Bauelemente 13, 23 in jeweils ein optisches Bauelement 50, 60. Die beiden nicht dargestellten Interferometer 10, 20 sind so anzuordnen, dass die in ihrer optischen Weglänge veränderbaren Teilstrahlen 32.1, 35.1 in dem eingesetzten integrierten optischen Bauelement 50, 60 umgelenkt werden. Eine Verschiebung der Position des integrierten optischen Bauelementes 50, 60 führt so zu einer gleichen optischen Wegänderung in den Teilstrahlen 32.1, 35.1 und somit zu einer gleichsinnigen und vom Betrag her gleichen Änderung des optischen Gangunterschiedes in den beiden Interferometern 10, 20.

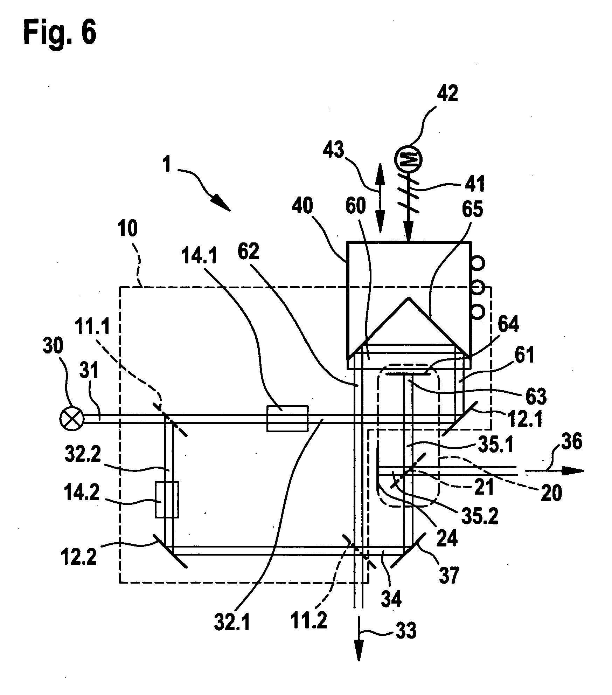

Figur 6 zeigt eine Variante einer interferometrischen Messeinrichtung 1 mit direkter Kopplung der Strahlumlenkung von zwei Interferometern 10, 20. Interferometer 10 ist dabei als Mach-Zehnder-Interferometer als Modulationsinterferometer und Interferometer 20 als Michelson-Interferometer mit den bereits in Figur 2 beschriebenen Bauelementen und Teilstrahlen ausgeführt. Eine Strahlungsquelle 30 liefert dabei kurzkohärente Strahlung 31. Die Strahlumlenkung der beiden in ihrer optischen Weglänge variabel einstellbaren Teilstrahlen 32.1, 35.1 der beiden Interferometer 10, 20 erfolgt durch ein bewegliches integriertes optisches Bauelement 60, wie es in der Figur 5 beschrieben ist. Die Position des auf einen beweglichen Träger 40 montierten beweglichen integrierten optischen Bauelements 60 ist durch einen Linearantrieb 41 mit einem Motor 42 entsprechend der dargestellten Bewegungsrichtung 43 einstellbar.

Der von dem ersten Strahlteiler 11.1 und dem akustooptischen Modulator 14.1 kommende Teilstrahl 32.1 wird von einem Umlenkspiegel 12.1 in einen Strahleintritt 61 des integrierten optischen Bauelementes 60 geleitet und von dessen Trippelprisma 65 über einen Strahlaustritt 62 zu dem zweiten Strahlteiler 11.2 reflektiert. Die Strahlführung über das Trippelprisma 65 ist demnach Bestandteil des ersten Interferometers 10. In dem Strahlteiler 11.2 wird der Teilstrahl 32.1 mit dem Teilstrahl 32.2 zusammengeführt, was jedoch wegen der unterschiedlichen durchlaufenen optischen Weglängen der Teilstrahlen 32.1, 32.2 und der verwendeten kurzkohärenten Strahlung 31 zu keiner Interferenzbildung führt. Die zusammengeführten Teilstrahlen 32.1, 32.2 gelangen nach dem Strahlteiler 11.2 zu einem Strahlaustritt 33, an den ein nicht dargestelltes Messinterferometer angeschlossen sein kann, und über einen Strahlübergang 34 und einen Umlenkspiegel 37 in das zweite Interferometer 20. In dem zweiten Interferometer 20 wird die eintreffende Strahlung von einem Strahlteiler 21 in zwei Teilstrahlen 35.1, 35.2 aufgeteilt. Ein Teilstrahl 35.2 mit fester optischer Weglänge wird von einem festen Spiegel 24 zurück zum Strahlteiler 21 reflektiert. Der andere in seiner optischen Weglänge variable Teilstrahl 35.2 gelangt über den gemeinsamen Strahlein-/austritt 63 des integrierten optischen Bauelementes 60 zu der verspiegelten Oberfläche 64, von der er wieder über den gemeinsamen Strahlein-/austritt 63 zu dem Strahlteiler 21 reflektiert wird. In dem Strahlteiler 21 werden die Teilstrahlen 35.1, 35.2 überlagert. Durch die unterschiedlichen optischen Weglängen, welche die beiden Teilstrahlen 35.1, 35.2 durchlaufen, wird der in dem ersten Interferometer 10 eingeschriebene Gangunterschied ausgeglichen, wodurch die beiden Teilstrahlen 35.1, 35.2 in dem Strahlteiler 21 interferieren können.

Eine Verschiebung der Position des integrierten optischen Bauelementes 60 entsprechend der Bewegungsrichtung 43 verändert die optische Weglänge in den beiden Teilstrahlen 32.1 und 35.1 gleichsinnig und um den gleichen Betrag. Eine Änderung der Gangunterschiede zwischen den Teilstrahlen 32.2, 35.2 mit festen optischen Weglängen und den jeweiligen Teilstrahlen 32.1, 35.1 mit variablen optischen Weglängen, wie er in beschriebener Form durch einen Austausch eines an den Strahlaustritt 33 angeschlossenen, nicht dargestellten Messinterferometers notwendig sein kann, kann so in einem Arbeitsschritt durch Verschieben des integrierten optischen Bauelementes 60 erfolgen. Dabei ist die mechanisch Kopplung der beweglichen optischen Bauelemente in den beiden Interferometern 10, 20 nicht durch Montage einzelner beweglicher Bauelemente 13, 23 auf einen gemeinsamen Träger 40, wie in den Figuren 1, 2 und 3 dargelegt, realisiert, sondern durch Integration solcher beweglichen Bauelemente 13, 23 in ein integriertes optisches Bauelement 60.

## Patentansprüche

1. Vorrichtung für eine interferometrische Messeinrichumg (1) mit einem ersten Interferometer (10), einem zweiten Interferometer (20), einer Strahlungsquelle (30) und einem ersten Strahlteiler (11.1) wobei dem ersten Interferometer (10) über die Strahlungsquelle (30) kurzkohärente Strahlung (31) zugeführt wird, die über den ersten Strahlteiler (11.1) in zwei Teilstrahlen (32.1, 32.2) aufgeteilt wird und wobei die optische Weglänge in einem Teilstrahl (32.1, 32.2) dahingehend länger ist als in dem anderen Teilstrahl (32.1, 32.2), dass der optische Gangunterschied größer als die Kohärenzlänge der Strahlung (31) ist, wobei die beiden Teilstrahlen (32.1, 32.2) vor einem Austritt des ersten Interferometers (10) wieder vereinigt und dem zweiten Interferometer (20) zugeführt werden, welches die Strahlung in zwei weitere Teilstrahlen (35.1, 35.2) aufteilt, wobei die optischen Weglängen der beiden Teilstrahlen (35.1, 35.2) dahingehend unterschiedlich sind, dass der in dem ersten Interferometer (10) eingeschriebene optische Gangunterschied wieder ausgeglichen wird, **dadurch gekennzeichnet, dass** die optische Weglänge für jeweils einen Teilstrahl (32.1, 35.1) in dem ersten und in dem zweiten Interferometer (10, 20) durch zumindest ein zur Vorrichtung gehörendes bewegliches optisches Bauelement (13, 23, 50, 60) einstellbar ist und dass die beweglichen optischen Bauelemente (13, 23, 50, 60) mechanisch miteinander gekoppelt sind.

2. Vorrichtung für eine interferometrische Messeinrichtung (1) nach Anspruch 1, **dadurch gekennzeichnet, dass** das Vorzeichen der Änderung der optischen Weglängen in den beiden Teilstrahlen (32.1, 35.1) des ersten und des zweiten Interferometers (10, 20) gleich oder gegensinnig ist und/oder dass der Betrag der Änderung der optischen Weglängen in den beiden Teilstrahlen (32.1, 35.1) gleich ist.

3. Vorrichtung für eine interferometrische Messeinrichtung (1) nach einem der Ansprüche 1 bis 2, **dadurch gekennzeichnet, dass** die beweglichen optischen Bauelemente (13, 23) auf einem gemeinsamen beweglichen Träger (40) montiert sind.

4. Vorrichtung für eine interferometrische Messeinrichtung (1) nach einem der Ansprüche 1 bis 3, **dadurch gekennzeichnet, dass** die beweglichen optischen Bauelemente (13, 23) als Planspiegel, als Tripelspiegel oder als Koppelelemente für Lichtleitelemente ausgeführt sind.

5. Vorrichtung für eine interferometrische Messeinrichtung (1) nach einem der Ansprüche 1 bis 4, **dadurch gekennzeichnet; dass** die beweglichen optischen Bauelemente (13, 23) der beiden Interferometer (10, 20) in einem optischen Bauelement (50,60) integriert sind.

6. Vorrichtung für eine interferometrische Messeinrichtung (1) nach Anspruch 5, **dadurch gekennzeichnet, dass** das integrierte optische Bauelement (50) als Tripelprisma (55) mit einem Strahleintritt (51) für das erste Interferometer (10) und einem Strahleintritt (52) für das zweite Interferometer (20) sowie einem Strahlaustritt (53) für das erste Interferometer (10) und einem Strahlaustritt (54) für das zweite Interferometer (20) ausgelegt ist.

7. Vorrichtung für eine interferometrische Messeinrichtung (1) nach Anspruch 5, **dadurch gekennzeichnet, dass** das integrierte optische Bauelement (60) als Tripelprisma (65) mit eingangsseitig bereichsweise verspiegelter Oberfläche (64) ausgeführt ist, wobei ein Teilstrahl (32.1, 35.1) eines Interferometers (10, 20) mit getrennten Strahlwegen über einen Strahleintritt (61) und einen Strahlaustritt (62) durch das Tripelprisma (65) umgelenkt ist und ein Teilstrahl (32.1, 35.1) des anderen Interferometers (10, 20) mit übereinander liegenden Strahlwegen an der verspiegelten Oberfläche (64) umgelenkt ist.

8. Vorrichtung für eine interferometrische Messeinrichtung (1) nach einem der Ansprüche 1 bis 7, **dadurch gekennzeichnet, dass** zur Verschiebung der beweglichen optischen Bauelemente (13, 23, 50, 60) ein manuell oder ein motorisch angetriebener Linearantrieb (41) vorgesehen ist.

9. Vorrichtung für eine interferometrische Messeinrichtung (1) nach einem der Ansprüche 1 bis 8, **dadurch gekennzeichnet, dass** die Strahleinkopplung in die interferometrische Messeinrichtung (1), die optische Verbindung zwischen den beiden Interferometern (10, 20) und/oder die Fortleitung der Austrittsstrahlen mittels Lichtleitern oder als Freistrahl erfolgt.

10. Vorrichtung für eine interferometrische Messeinrichtung (1) nach einem der Ansprüche 1 bis 9, **dadurch gekennzeichnet, dass** in beiden Interferometern (10, 20) separat bewegliche optische Bauelemente zum Einstellen der optischen Gangunterschiede zwischen den Teilstrahlen (32.1, 32.2; 35.1,35.2) vorgesehen sind und die Kopplung der Bewegung der optischen Bauelemente elektronisch über die gleichartige Ansteuerung von elektrischen Antriebselementen ausgeführt ist.

11. Vorrichtung für eine interferometrische Messeinrichtung (1) nach einem der Ansprüche 1 bis 10, **dadurch gekennzeichnet, dass** das erste Interferometer (10) ein Modulationsinterferometer darstellt und das zweite Interferometer (20) ein Referenzinterferometer oder eine Referenzsonde oder eine Referenzmessstelle bildet.

12. Verfahren zum Ausgleich der optischen Wegdifferenz in einer interferometrischen Messeinrichtung (1) mit zwei aufeinander folgenden Interferometern (10, 20), wobei dem ersten Interferometer (10) über eine Strahlungsquelle (30) kurzkohärente Strahlung (31) zugeführt wird, die über einen ersten Strahlteiler (11. 1) in zwei Teilstrahlen (32.1, 32.2) aufgeteilt wird, von denen ein Teilstrahl (32.1, 32.2) eine größere optische Weglänge als der andere Teilstrahl (32.1, 32.2) dahingehend durchläuft, dass der optische Gangunterschied zwischen den Teilstrahlen (32.1, 32.2) größer als die Kohärenzlänge der Strahlung (31) ist, wobei die beiden Teilstrahlen (32.1, 32.2) vor einem Austritt des ersten Interferometers (10) wieder vereinigt und dem zweiten Interferometer (20) zugeführt werden, welches die Strahlung in zwei weitere Teilstrahle (35.1, 35.2) aufteilt, wobei die optischen Weglängen der beiden Teilstrahlen (35.1, 35.2) dahingehend unterschiedlich sind, dass der in dem ersten interferometer (10) eingeschriebene optische Gangunterschied wieder ausgeglichen wird, **dadurch gekennzeichnet, dass** die optischen Gangunterschiede zwischen den Teilstrahlen (32.1, 32.2; 35.1, 35.2) in den beiden Interferometern (10, 20) durch mechanisch gekoppelte bewegliche optische Bauelemente (13, 23, 50, 60) gleichzeitig und um den gleichen Betrag verändert werden.

13. Verfahren zum Ausgleich der optischen Wegdifferenz in einer interferometrischen Messeinrichtung (1) nach Anspruch 12, **dadurch gekennzeichnet, dass** die Änderung der optischen Weglänge in beiden Teilstrahlen (32.1, 35.1) gleich- oder gegensinnig erfolgt.

## Claims

1. Apparatus for an interferometric measuring device (1), having a first interferometer (10), a second interferometer (20), a radiation source (30) and a first beam splitter (11.1), the first interferometer (10) being fed via the radiation source (30) short-coherence radiation (31) which is split via the first beam splitter (11.1) into two component beams (32.1, 32.2), and the optical path length in one component beam (32.1, 32.2) being longer than in the other component beam (32.1, 32.2) to the effect that the optical path difference is greater than the coherence length of the radiation (31), the two component beams (32.1, 32.2) being reunited upstream of an exit of the first interferometer (10) and being fed to the second interferometer (20), which splits the radiation into two further component beams (35.1, 35.2), the optical path lengths of the two component beams (35.1, 35.2) being different to the effect that the optical path difference inscribed in the first interferometer (10) is recompensated, **characterized in that** the optical path length for in each case one component beam (32.1, 35.1) in the first and in the second interferometers (10, 20) can be set by at least one movable optical component (13, 23, 50, 60) belonging to the apparatus, and **in that** the movable optical components (13, 23, 50, 60) are mechanically coupled to one another.

2. Apparatus for an interferometric measuring device (1) according to Claim 1, **characterized in that** the sign of the change in the optical path lengths in the two component beams (32.1, 35.1) of the first and the second interferometers (10, 20) is the same or opposite, and/or **in that** the absolute value of the change in the optical path lengths in the two component beams (32.1, 35.1) is the same.

3. Apparatus for an interferometric measuring device (1) according to one of Claims 1 to 2, **characterized in that** the movable optical components (13, 23) are mounted on a common movable carrier (40).

4. Apparatus for an interferometric measuring device (1) according to one of Claims 1 to 3, **characterized in that** the movable optical components (13, 23) are designed as plane mirrors, as triple mirrors or as coupling elements for light-guiding elements.

5. Apparatus for an interferometric measuring device (1) according to one of Claims 1 to 4, **characterized in that** the movable optical components (13, 23) of the two interferometers (10, 20) are integrated in an optical component (50, 60).

6. Apparatus for an interferometric measuring device (1) according to Claim 5, **characterized in that** the integrated optical component (50) is designed as a triple prism (55) with a beam entrance (51) for the first interferometer (10) and a beam entrance (52) for the second interferometer (20) as well as a beam exit (53) for the first interferometer (10) and a beam exit (54) for the second interferometer (20).

7. Apparatus for an interferometric measuring device (1) according to Claim 5, **characterized in that** the integrated optical component (60) is designed as a triple prism (65) with a surface (64) partially mirror-coated on the input side, a component beam (32.1, 35.1) of one interferometer (10, 20) being deflected by the triple prism (65) with separate beam paths via a beam entrance (61) and a beam exit (62), and a component beam (32.1, 35.1) of the other interferometer (10, 20) being deflected on the mirror-coated surface (64) with superimposed beam paths.

8. Apparatus for an interferometric measuring device (1) according to one of Claims 1 to 7, **characterized in that** a manually driven or a motor-driven linear drive (41) is provided for displacing the movable optical components (13, 23, 50, 60).

9. Apparatus for an interferometric measuring device (1) according to one of Claims 1 to 8, **characterized in that** the coupling of beams into the interferometric measuring device (1), the optical connection between the two interferometers (10, 20) and/or the passing on of the exit beams are performed by means of light guides or as free beams.

10. Apparatus for an interferometric measuring device (1) according to one of Claims 1 to 9, **characterized in that** separately movable optical components for setting the optical path differences between the component beams (32.1, 32.2; 35.1, 35.2) are provided in the two interferometers (10, 20), and the coupling of the movement of the optical components is executed electronically by uniform driving of electric drive elements.

11. Apparatus for an interferometric measuring device (1) according to one of Claims 1 to 10, **characterized in that** the first interferometer (10) constitutes a modulation interferometer, and the second interferometer (20) forms a reference interferometer or a reference probe or a reference measuring point.

12. Method for compensating the optical path difference in an interferometric measuring device (1) with two consecutive interferometers (10, 20), the first interferometer (10) being fed via a radiation source (30) short-coherence radiation (31) which is split via a first beam splitter (11.1) into two component beams (32.1, 32.2), of which one component beam (32.1, 32.2) traverses a larger optical path length than the other component beam (32.1, 32.2) to the effect that the optical path difference between the component beams (32.1, 32.2) is greater than the coherence length of the radiation (31), the two component beams (32.1, 32.2) being reunited upstream of an exit of the first interferometer (10) and being fed to the second interferometer (20), which splits the radiation into two further component beams (35.1, 35.2), the optical path lengths of the two component beams (35.1, 35.2) being different to the effect that the optical path difference inscribed in the first interferometer (10) is recompensated, **characterized in that** the optical path differences between the component beams (32.1, 32.2; 35.1, 35.2) in the two interferometers (10, 20) are varied by mechanically coupled movable optical components (13, 23, 50, 60) simultaneously and by the same absolute value.

13. Method for compensating the optical path difference in an interferometric measuring device (1) according to Claim 12, **characterized in that** the change in the optical path length in the two component beams (32.1, 35.1) is performed in the same sense or opposite senses.

## Revendications

1. Dispositif pour un équipement de mesure par interférométrie (1) comprenant un premier interféromètre (10), un deuxième interféromètre (20), une source de rayonnement (30) et un premier diviseur de rayon (11.1), un rayonnement cohérent court (31) étant acheminé au premier interféromètre (10) par le biais de la source de rayonnement (30), ce rayonnement étant divisé en deux rayons partiels (32.1, 32.2) par le premier diviseur de rayon (11.1) et la longueur du trajet optique dans un premier rayon partiel (32.1, 32.2) étant plus longue que dans l'autre rayon partiel (31.2, 32.2) en ce sens que la différence de phase optique est supérieure à la longueur de cohérence du rayonnement (31), les deux rayons partiels (31.2, 32.2) étant de nouveau unifiés avant une sortie du premier interféromètre (10) et acheminés au deuxième interféromètre (20) qui divise le rayonnement en deux nouveaux rayons partiels (35.1, 35.2), les longueurs de trajet optiques des deux rayons partiels (35.1, 35.2) étant différentes en ce sens que la différence de phase optique appliquée dans le premier interféromètre (10) est de nouveau compensée, **caractérisé en ce que** la longueur du trajet optique à chaque fois d'un rayon partiel (32.1, 35.1) dans le premier et dans le deuxième interféromètre (10, 20) peut être réglée par au moins un composant optique mobile (13, 23, 50, 60) faisant partie du dispositif et que les composants optiques mobiles (13, 23, 50, 60) sont couplés mécaniquement entre eux.

2. Dispositif pour un équipement de mesure par interférométrie (1) selon la revendication 1, **caractérisé en ce que** le signe de la modification des longueurs de trajet optiques dans les deux rayons partiels (32.1, 35.1) du premier et du deuxième interféromètres (10, 20) est le même ou l'opposé et/ou que la valeur absolue de la modification des longueurs de trajet optiques dans les deux rayons partiels (32.1, 35.1) est la même.

3. Dispositif pour un équipement de mesure par interférométrie (1) selon l'une des revendications 1 à 2, **caractérisé en ce que** les composants optiques mobiles (13, 23) sont montés sur un support mobile commun (40).

4. Dispositif pour un équipement de mesure par interférométrie (1) selon l'une des revendications 1 à 3, **caractérisé en ce que** les composants optiques mobiles (13, 23) sont réalisés sous la forme de miroirs plans, de miroirs triples ou d'éléments de couplage pour des éléments de guidage de la lumière.

5. Dispositif pour un équipement de mesure par interférométrie (1) selon l'une des revendications 1 à 4, **caractérisé en ce que** les composants optiques mobiles (13, 23) des deux interféromètres (10, 20) sont intégrés dans un composant optique (50, 60).

6. Dispositif pour un équipement de mesure par interférométrie (1) selon la revendication 5, **caractérisé en ce que** le composant optique intégré (50) est conçu sous la forme d'un triple prisme (55) avec une entrée de rayon (51) pour le premier interféromètre (10) et une entrée de rayon (52) pour le deuxième interféromètre (20) ainsi qu'une sortie de rayon (53) pour le premier interféromètre (10) et une sortie de rayon (54) pour le deuxième interféromètre (20).

7. Dispositif pour un équipement de mesure par interférométrie (1) selon la revendication 5, **caractérisé en ce que** le composant optique intégré (60) est réalisé sous la forme d'un triple prisme (65) avec une surface (64) partiellement réfléchissante du côté de l'entrée, un rayon partiel (32.1, 35.1) d'un interféromètre (10, 20) ayant des trajets de rayon différents étant dévié par le biais d'une entrée de rayon (61) et d'une sortie de rayon (62) à travers le triple prisme (65) et un rayon partiel (32.1, 35.1) de l'autre interféromètre (10, 20) ayant des trajets de rayon superposés étant dévié sur la surface réfléchissante (64).

8. Dispositif pour un équipement de mesure par interférométrie (1) selon l'une des revendications 1 à 7, **caractérisé en ce qu'**un mécanisme d'entraînement linéaire (41) à entraînement manuel ou motorisé est prévu pour déplacer les composants optiques mobiles (13, 23, 50, 60).

9. Dispositif pour un équipement de mesure par interférométrie (1) selon l'une des revendications 1 à 8, **caractérisé en ce que** l'injection du rayon dans l'équipement de mesure par interférométrie (1), la liaison optique entre les deux interféromètres (10, 20) et/ou la poursuite de la propagation des rayons de sortie sont réalisées au moyen de fibres optiques ou sous la forme d'un rayon libre.

10. Dispositif pour un équipement de mesure par interférométrie (1) selon l'une des revendications 1 à 9, **caractérisé en ce que** des composants optiques mobiles séparés sont prévus dans les deux interféromètres (10, 20) pour régler les différences de phase optique entre les rayons partiels (32.1, 32.2 ; 35.1, 35.2) et le couplage du mouvement des composants optiques est réalisé de manière électronique par une excitation identique des éléments d'entraînement électriques.

11. Dispositif pour un équipement de mesure par interférométrie (1) selon l'une des revendications 1 à 10, **caractérisé en ce que** le premier interféromètre (10) représente un interféromètre à modulation et le deuxième interféromètre (20) forme un interféromètre de référence ou une sonde de référence ou encore un point de mesure de référence.

12. Procédé de compensation de la différence de trajet optique dans un équipement de mesure par interférométrie (1) comprenant deux interféromètres (10, 20) successifs, un rayonnement cohérent court (31) étant acheminé au premier interféromètre (10) par le biais d'une source de rayonnement (30), ce rayonnement étant divisé en deux rayons partiels (32.1, 32.2) par un premier diviseur de rayon (11.1), parmi lesquels un rayon partiel (32.1, 32.2) parcourt un trajet optique plus long que l'autre rayon partiel (32.1, 32.2) en ce sens que la différence de phase optique entre les rayons partiels (31.2, 32.2) est supérieure à la longueur de cohérence du rayonnement (31), les deux rayons partiels (31.2, 32.2) étant de nouveau unifiés avant une sortie du premier interféromètre (10) et acheminés au deuxième interféromètre (20) qui divise le rayonnement en deux nouveaux rayons partiels (35.1, 35.2), les longueurs de trajet optiques des deux rayons partiels (35.1, 35.2) étant différentes en ce sens que la différence de phase optique appliquée dans le premier interféromètre (10) est de nouveau compensée, **caractérisé en ce que** les différences de phase optique entre les rayons partiels (32.1, 32.2 ; 35.1, 35.2) dans les deux interféromètres (10, 20) sont modifiées simultanément et de la même valeur par des composants optiques mobiles (13, 23, 50, 60) couplés mécaniquement entre eux.

13. Procédé de compensation de la différence de trajet optique dans un équipement de mesure par interférométrie (1) selon la revendication 12, **caractérisé en ce que** la modification de la longueur du trajet optique dans les rayons partiels (32.1, 35.1) s'effectue dans le même sens ou dans des sens opposés.
